# EUROPÄISCHE PATENTSCHRIFT

(11) **EP 3 117 399 B1**
(45) Veröffentlichungstag und Bekanntmachung des Hinweises auf die Patenterteilung: **10.03.2021**
(21) Anmeldenummer: 15700867.3
(22) Anmeldetag: 20.01.2015
(51) Int. Cl.: G06T 3/40, B60R 1/00

(54) **VERFAHREN ZUM ZUSAMMENFÜGEN VON EINZELBILDERN, DIE VON EINEM KAMERASYSTEM AUS UNTERSCHIEDLICHEN POSITIONEN AUFGENOMMEN WURDEN, ZU EINEM GEMEINSAMEN BILD**
METHOD FOR ASSEMBLING SINGLE IMAGES THAT HAVE BEEN TAKEN FROM DIFFERENT POSITIONS BY A CAMERA SYSTEM TO FORM A JOINT IMAGE
PROCÉDÉ POUR ASSEMBLER DES IMAGES ÉLÉMENTAIRES QUI ONT ÉTÉ PRISES PAR UN SYSTÈME D'APPAREILS PHOTOGRAPHIQUES À PARTIR DE DIFFÉRENTES POSITIONS, POUR FORMER UNE IMAGE UNIQUE

(30) Priorität: 10.03.2014 DE 102014204303
(43) Veröffentlichungstag der Anmeldung: 18.01.2017
(73) Patentinhaber: Robert Bosch GmbH, 70442 Stuttgart (DE)
(72) Erfinder: LIEPELT, David, 70372 Stuttgart (DE); CANO, Raphael, 70180 Stuttgart (DE); HUCKER, Dennis, 76359 Marxzell (DE); ESPARZA GARCIA, Jose Domingo, 70372 Stuttgart (DE); ESPARZA, Maria-Jesus, 71229 Leonberg (DE)
(86) Internationale Anmeldenummer: PCT/EP2015/050978
(87) Internationale Veröffentlichungsnummer: WO 2015/135670

(56) Entgegenhaltungen:
- EP-A1- 2 192 552
- WO-A1-2013/175753
- DE-A1- 10 303 015
- DE-A1-102011 082 881

## Beschreibung

### Stand der Technik

Die vorliegende Erfindung betrifft ein Verfahren zum Zusammenfügen von Einzelbildern, die von einem Kamerasystem aus unterschiedlichen Positionen aufgenommen wurden, zu einem gemeinsamen Bild.

Solche Verfahren werden beispielsweise in Fahrassistenzsystemen angewendet. Fahrassistenzsysteme zielen darauf ab, den Fahrer eines Fahrzeuges während einer Bewegung des Fahrzeuges zu unterstützen.

Eine solche Unterstützung kann auf die folgenden Weisen erfolgen:
- Darstellen einer Umgebung im Nahbereich des Fahrzeuges für den Fahrer, um Kollisionen mit Hindernissen, die sich nicht im Sichtfeld des Fahrers befinden, zu vermeiden,
- Übernehmen einiger Aktivitäten des Fahrers, um den Fahrkomfort während der Bewegung des Fahrzeuges zu erhöhen,
- Überwachen der Aktivitäten des Fahrers und Eingreifen im Falle einer Gefahrensituation, und/oder
- Automatisches Fahren, ohne die Notwendigkeit eines Fahrers an Bord des Fahrzeuges.

Die vorliegende Erfindung ist insbesondere darauf gerichtet, eine zusammengesetzte Ansicht in einem Surround-View-System abzubilden.

In Systemen mit mehreren Kameras erweist sich das Zusammenfügen mehrerer Kamerabilder als eine schwierige Aufgabe. Die Tatsache, dass Bilder von Sensoren unterschiedlicher Position erfasst werden führt dazu, dass die Bilder sich aufgrund eines Perspektivenwechsels unterscheiden. Je weiter zwei Sensoren voneinander entfernt sind, desto größer ist der Perspektivenwechsel, wodurch eine Verschiedenheit der beiden Bilder zueinander vergrößert wird.

Verschiedene Vorgehensweisen zum Zusammenfügen mehrerer Kamerabilder sind darauf ausgelegt eine gemeinsame Ansicht mehrerer Bilder zu erzeugen. Diese Bilder werden üblicherweise entweder durch verschiedene Sensoren erfasst, die zur gleichen Zeit aktiv sind, oder durch einen einzelnen Sensor erfasst, der zu aufeinanderfolgenden Zeitpunkten an unterschiedlichen Positionen aktiv ist.

Der aktuelle Stand der Technik zum Zusammenfügen von Bildern unterschiedlicher Ansichten basiert auf einer Abstandseinschätzung, die ein Mittel zur Korrektur der Auswirkungen großer Unterschiede zwischen den einzelnen Bildern liefert. Die Abstandseinschätzung kann direkt aus den Bilddaten erfolgen oder das Ergebnis einer Fusion mit weiteren Sensordaten sein (z.B. aus einem Ultraschall-, Lidar-, oder Radarsystem).

Ein Verfahren zum Darstellen der Umgebung des Kraftfahrzeugs in einer bestimmten Ansicht ist aus der DE102011082881A1 bekannt. In dieser wird erste Bildinformation der Umgebung eines Kraftfahrzeugs mit zumindest einer Fahrzeug-Kamera eines Fahrzeug-Kamerasystems erfasst. Bei dem Verfahren wird räumliche Information, beispielsweise Tiefeninformation oder räumliche Koordinaten, in Bezug auf die aufgenommene erste Bildinformation bestimmt. Unter Verwendung der räumlichen Information wird die erste zweite Bildinformation entsprechend der gewünschten Ansicht transformiert. Schließlich wird die Umgebung des Kraftfahrzeugs in der gewünschten Ansicht basierend auf der zweiten Bildinformation dargestellt.

Bei Surround-View-Systemen wird jede zusammengesetzte Ansicht durch ein bildbasiertes Rendern (IBR - image based rendering) erzeugt, wobei echte Bilder verwendet werden, um eine angenommene Projektionsfläche mit Texturen zu versehen. Diese Projektionsfläche wird typischerweise basierend auf den Abstandsinformationen beschrieben, die von den verschiedenen Sensoren verfügbar sind.

Es hat sich gezeigt, dass eine Verformung der Projektionsfläche basierend auf den Abstandsinformationen die Verschiedenheit zweier Bildern verringert, indem ähnliche Punkte nahe zueinander projiziert werden.

Dennoch ist es ein bekanntes Problem dieser Lösung, dass die Projektionsfläche dynamisch verändert werden muss, wodurch manchmal scharfe Kanten erzeugt werden, die einen ungünstigen visuellen Effekt verursachen. WO2013/175753A1, DE102011082881A1 offenbaren Verfahren zum Zusammenfügen von Einzelbildern, die von einem Kamerasystem aus unterschiedlichen Positionen aufgenommen wurden, zu einem gemeinsamen Bild. Dabei wird eine Projektionsfläche verformt und eine Ansicht dieser Projektionsfläche errechnet.

### Offenbarung der Erfindung

Die erfindungsgemäße Verfahren zum Zusammenfügen von Einzelbildern, die von einem Kamerasystem aus unterschiedlichen Positionen aufgenommen wurden, zu einem gemeinsamen Bild, umfasst ein Bereitstellen einer ersten Projektionsfläche mit einer ersten geometrischen Form und einer zweiten Projektionsfläche mit einer zweiten geometrischen Form, wobei jedem Punkt der ersten Projektionsfläche ein Punkt auf der zweiten Projektionsfläche zugehörig ist, wobei die erste Projektionsfläche und die zweite Projektionsfläche geometrische Konstrukte in einem virtuellen dreidimensionalen Raum sind, ein Erfassen von Positionsinformationen, die eine Anordnung von in den Einzelbildern gezeigten Objekten gegenüber dem Kamerasystem beschreiben, ein Umformen der ersten geometrischen Form der ersten Projektionsfläche basierend auf den erfassten Positionsinformationen, ein Zuordnen von Texturinformationen der Einzelbilder zu Flächenbereichen der umgeformten ersten Projektionsfläche, ein Übertragen der Texturinformationen von Punkten der ersten Projektionsfläche auf die entsprechend zugehörigen Punkte der zweiten Projektionsfläche, wobei die zweite Projektionsfläche nicht geometrisch verändert wird, und ein Erzeugen des gemeinsamen Bildes aus einer Ansicht der zweiten Projektionsfläche. Dabei sind die erste und die zweite Projektionsfläche virtuelle Flächen.

Dieses ist vorteilhaft, da auf diese Weise große Verschiedenheiten von Bildern in deren Fügebereichen verringert werden. Des Weiteren werden, dadurch dass es keine geometrische Veränderung der zweiten Projektionsfläche gibt, flüssigere Visualisierungseffekte erreicht. Bildartefakte werden verringert. Zudem wird eine Reduzierung des Rechenaufwandes beim Erzeugen des gemeinsamen Bildes erreicht.

Die Unteransprüche zeigen bevorzugte Weiterbildungen der Erfindung.

Dabei ist es vorteilhaft, wenn die erste Projektionsfläche aus mehreren Polygonen oder Primitiven gebildet wird, deren Position jeweils durch einen Vektor oder ein Vertex definiert ist. Somit ist es möglich, die benötigte Rechenleistung zu minimieren. Ferner wird damit eine einfache Anpassung der geometrischen Auflösung der ersten Projektionsfläche auszuführen.

Des Weiteren ist es vorteilhaft, wenn die Einzelbilder einen Überschneidungsbereich abbilden, der einen gemeinsam Bereich im Umfeld des Kamerasystems zeigt. Durch einen solchen Überschneidungsbereich kann ein besonders flüssiger visueller Übergang zwischen zwei Einzelbildern erreicht werden.

Ebenso vorteilhaft ist es, wenn die Positionsinformationen zeitgleich mit den Einzelbildern erfasst werden. Somit wird ein Versatz zwischen den geometrischen und den grafischen Daten minimiert und somit Bildartefakte, die aufgrund dieses Versatzes entstehen, verhindert.

Bevorzugt ist das Kamerasystem ein Surround-View-System eines Fahrzeuges. Dies ist vorteilhaft, da in einem solchen Umfeld oftmals die notwendigen Sensoren zum Erfassen der Positionsinformationen bereits vorhanden sind.

Weiterhin ist es vorteilhaft, wenn die Einzelbilder mit einem zeitlichen Versatz durch dieselbe Kamera des Kamerasystems erfasst werden. Somit wird die Anzahl der benötigten Kameras reduziert und somit ein weiterer Kostenvorteil erlangt.

Eine Bildverarbeitungseinheit oder ein Computer, der eingerichtet ist, das erfindungsgemäße Verfahren auszuführen, ist ebenso vorteilhaft. Eine solche weist alle Vorteile des erfindungsgemäßen Verfahrens auf. Ferner wird dadurch eine Einheit geschaffen, durch die ein bereits bestehendes Kamerasystem auf einfache Weise erweitert werden kann.

Ferner ist ein Computerprogrammprodukt vorteilhaft, das Programmteile umfasst, welche, wenn geladen in einem Computer, zur Durchführung des erfindungsgemäßen Verfahrens geeignet sind. Durch ein solches Computerprogrammprodukt wird eine einfache Möglichkeit zur Erweiterung bestehender Bildverarbeitungseinheiten geschaffen.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein Fahrzeug mit einer Bildverarbeitungseinheit, die eingerichtet ist, das erfindungsgemäße Verfahren auszuführen,
- Figur 2: eine Darstellung einer ersten und einer zweiten Projektionsfläche,
- Figur 3: eine Darstellung einer umgeformten ersten Projektionsfläche, und
- Figur 4: eine Darstellung der zweiten Projektionsfläche mit übertragenen Texturinformationen.

### Ausführungsformen der Erfindung

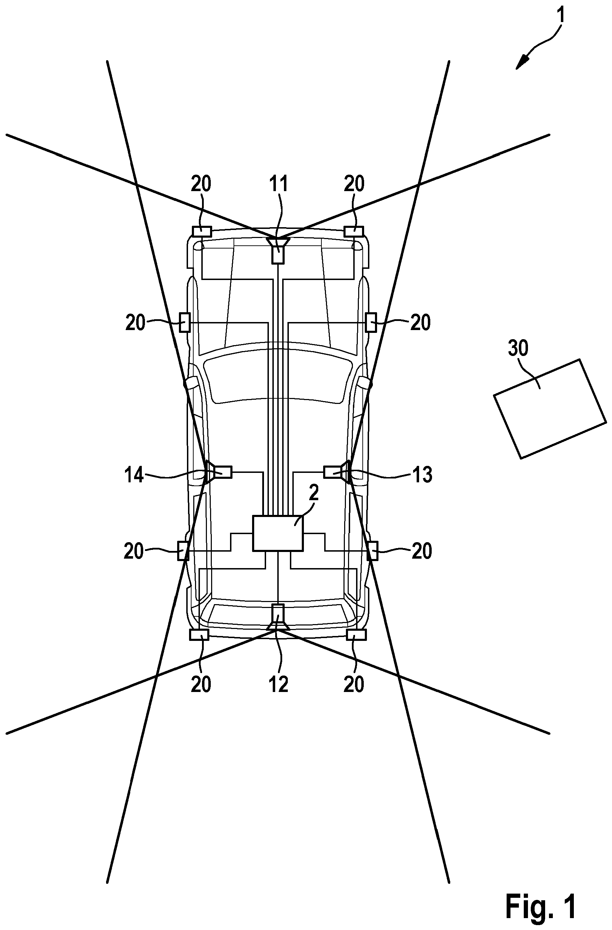

Figur 1 zeigt ein Fahrzeug 1 mit einer Bildverarbeitungseinheit 2, die eingerichtet ist, das erfindungsgemäße Verfahren auszuführen.

Das Fahrzeug 1 ist mit einem Surround-View-System ausgerüstet, das ein Kamerasystem umfasst. Das Kamerasystem umfasst vier Kameras 11 bis 14, die das komplette Umfeld des Fahrzeuges 1 erfassen: eine erste Kamera 11, deren optische Achse entlang einer Längsachse des Fahrzeuges nach vorne gerichtet ist, eine zweite Kamera 12, deren optische Achse entlang einer Längsachse des Fahrzeuges nach hinten gerichtet ist, eine dritten Kamera 13, deren optische Achse entlang einer Querachse des Fahrzeuges nach rechts gerichtet ist, und eine vierte Kamera 14, deren optische Achse entlang einer Querachse des Fahrzeuges nach links gerichtet ist. Durch jede der Kameras 11 bis 14 werden Einzelbilder erfasst, welche jeweils einen Ausschnitt des Umfeldes des Fahrzeuges zeigen, der in einem Blickfeld der entsprechenden Kamera liegt. Die Blickfelder benachbarter Kameras überschneiden sich. So wird beispielsweise ein Bereich, der rechts vor dem Fahrzeug liegt sowohl von der ersten Kamera 11 als auch von der dritten Kamera 13 erfasst. Somit wird durch jedes erfasste Einzelbild einer Kamera 11 bis 14 ein Überschneidungsbereich abgebildet, der einen Bereich im Umfeld des Kamerasystems zeigt, der auch von der jeweils benachbarten Kamera erfasst wird. Die von den Kameras 11 bis 14 erfassten Einzelbilder werden über jeweils eine Bilddatenleitung an die Bildverarbeitungseinheit 2 übertragen.

Das Fahrzeug ist ferner mit einer Abstandssensorik ausgerüstet. Diese umfasst mehrere Ultraschallsensoren 20. Diese sind an einem Außenumfang des Fahrzeuges 1 angeordnet und jeweils so voneinander beabstandet, dass diese in ihrer Gesamtheit das gesamte Umfeld des Fahrzeug 1 erfassen und somit Positionsinformationen von Objekten 30 erfassen, die sich in dem Umfeld des Fahrzeuges 1 befinden. Da sowohl das Kamerasystem, und somit die Kameras 11 bis 14, als auch die Abstandssensorik, und somit die Ultraschallsensoren 20, in jeweils einer festen Position an dem Fahrzeug 1 angeordnet sind, ist die Abstandssensorik dazu in der Lage, Positionsinformationen von Objekten 30 gegenüber dem Kamerasystem zu erfassen. Die von den Ultraschallsensoren 20 erfassten Positionsinformationen werden über jeweils eine Datenleitung an die Bildverarbeitungseinheit 2 übertragen. Die Bildverarbeitungseinheit 2 ist eine elektronische Recheneinheit.

Durch die Bildverarbeitungseinheit 2 wird das erfindungsgemäße Verfahren zum Zusammenfügen von Einzelbildern zu einem gemeinsamen Bild ausgeführt. Dabei ist es ein grundlegender Gedanke, dass ein doppelter Satz von geometrisch geformten Projektionsflächen verwendet wird, wobei eine der Projektionsflächen nicht gerendert wird, sondern lediglich als eine Unterstützung für das Zusammenfügen der Einzelbilder genutzt wird. Diese unterstützende geometrisch geformte Projektionsfläche ist mit einer eins-zu-eins Verknüpfung zu einer sichtbaren Projektionsfläche verbunden, in dem Sinne, dass diese dieselbe Anzahl an Vertices und Verbindungen zwischen diesen aufweisen.

Dazu wird in einem ersten Schritt zunächst eine erste Projektionsfläche G' mit einer ersten geometrischen Form und eine zweiten Projektionsfläche G mit einer zweiten geometrischen Form bereitgestellt. Sowohl die erste Projektionsfläche G' als auch die zweite Projektionsfläche G sind geometrische Konstrukte in einem virtuellen dreidimensionalen Raum, deren geometrische Form beispielsweise durch Vektoren dargestellt werden kann. Der virtuelle dreidimensionale Raum ist dabei im einfachsten Falle ein Abbild des real existierenden Raumes um das Fahrzeug. Das bedeutet, dass jedem Ortspunkt in dem virtuellen dreidimensionalen Raum ein Ortspunkt in dem real existierenden Raum um das Fahrzeug zugeordnet ist. Die erste Projektionsfläche G' und die zweite Projektionsfläche G können beispielsweise durch jeweils eine Vielzahl von Polygonen und jeweils einem zugehörigen Vertex definiert sein.

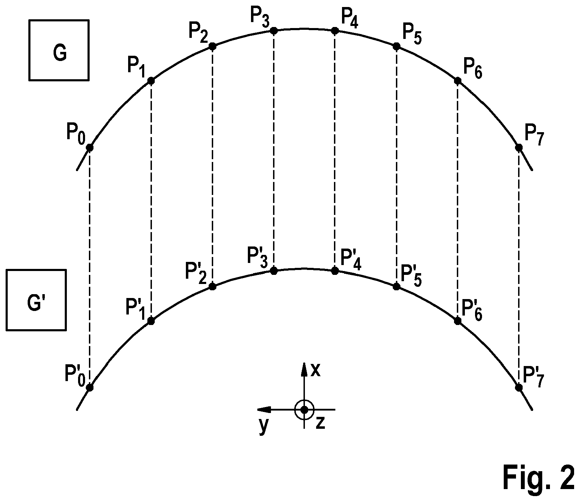

Figur 2 zeigt eine Darstellung der ersten Projektionsfläche G' und einer zweiten Projektionsfläche G in dem virtuellen dreidimensionalen Raum. Der Einfachheit halber ist dabei lediglich eine zweidimensionale Ebene des virtuellen dreidimensionalen Raumes dargestellt, in dem die erste Projektionsfläche G' und die zweite Projektionsfläche G aufgespannt sind. Die erste Projektionsfläche G' besteht aus mehreren Punkten P'₀ bis P'₇. Die zweite Projektionsfläche G besteht aus mehreren Punkten P₀ bis P₇. Es ist offensichtlich, dass die Zahl der Punkte nicht auf die hier beschriebenen acht Punkte beschränkt ist, sondern an die jeweiligen Anforderungen angepasst werden kann. Jedem Punkt P'₀ bis P'₇ der ersten Projektionsfläche G' ist ein Punkt P₀ bis P₇ auf der zweiten Projektionsfläche G zugehörig. In dem in Figur gezeigten Beispiel ist dem Punkt P'₀ der ersten Projektionsfläche G' der Punkt P₀ der zweiten Projektionsfläche G zugeordnet. Dem Punkt P'₁ der ersten Projektionsfläche G' ist der Punkt P₀ der zweiten Projektionsfläche G zugeordnet. Dem Punkt P'₂ der ersten Projektionsfläche G' ist der Punkt P₂ der zweiten Projektionsfläche G zugeordnet. Dem Punkt P'₃ der ersten Projektionsfläche G' ist der Punkt P₃ der zweiten Projektionsfläche G zugeordnet, usw.

Die geometrische Form der zweiten Projektionsfläche ist dabei beispielsweise so gewählt, dass jeder Punkt der zweiten Projektionsfläche von einem Punkt in dem virtuellen dreidimensionalen Raum aus eingesehen werden kann, der eine Position einer virtuellen Kamera ist. Die virtuelle Kamera ist dabei eine Kamera, die ein Bild erfassen würde, das dem aus Einzelbildern zusammengefügten gemeinsamen Bild entspricht. So könnte die zweite Projektionsfläche sich beispielsweise sphärisch um die Position der virtuellen Kamera herum erstrecken, wobei die Position der virtuellen Kamera nicht notwendigerweise im Zentrum dieser Sphäre liegt. In anderen Beispielen kann die geometrische Form der zweiten Projektionsfläche G allerdings auch andersartig festgelegt sein. So könnte diese ebenso eine andere runde oder eckige Form aufweisen, die das Fahrzeug 1 ganz oder nur teilweise umschließt oder speziell an den von den Kameras 11 bis 14 erfassten Bereich angepasst ist.

In einem zweiten Schritt S2 werden die Positionsinformationen, die eine Anordnung von in den Einzelbildern gezeigten Objekten 30 gegenüber dem Kamerasystem beschreiben, von der Abstandssensorik erfasst und an die Bildverarbeitungseinheit 2 übertragen.

In einem dritten Schritt S3 erfolgt ein Umformen der ersten geometrischen Form der ersten Projektionsfläche G' basierend auf den erfassten Positionsinformationen. Dies kann beispielsweise dadurch erfolgen, dass zunächst die Positionsinformationen ebenfalls in den virtuellen dreidimensionalen Raum übertragen werden, in dem auch die erste Projektionsfläche G' aufgespannt ist.

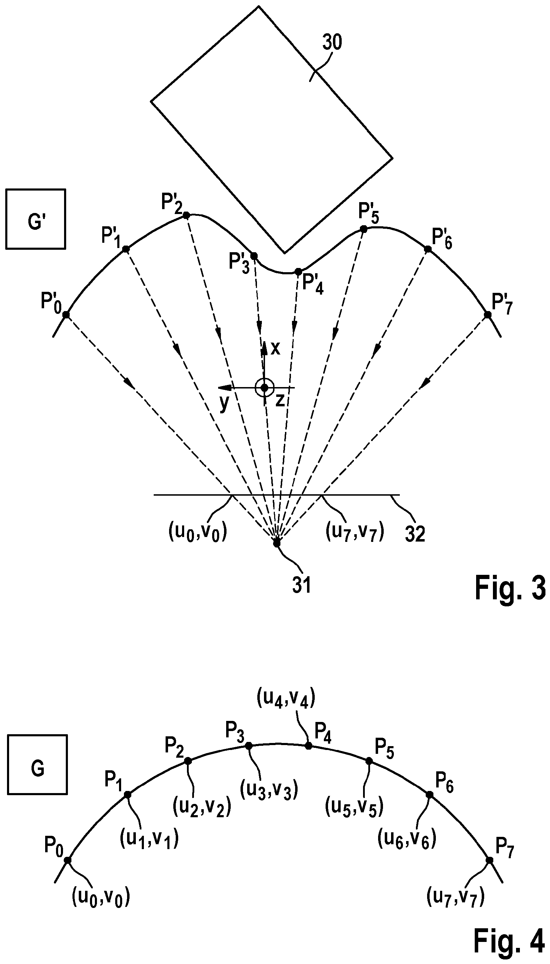

Dies ist beispielhaft in Figur 3 gezeigt. Figur 3 ist eine Darstellung einer umgeformten ersten Projektionsfläche G'. Ein in einem Einzelbild gezeigtes Objekt 30 wurde mittels der dieses Objekt 30 betreffenden Positionsinformationen in den virtuellen dreidimensionalen Raum übertragen. Dies ist möglich, da jedem Ortspunkt in dem virtuellen dreidimensionalen Raum ein Ortspunkt in dem real existierenden Raum um das Fahrzeug zugeordnet ist.

In der hier beschriebenen beispielhaften Situation sei das Objekt 30 eine Objekt, die sich rechts neben dem Fahrzeug 1 befindet. Das Objekt 30 wird von den Ultraschallsensoren 20 erfasst, und die Positionsinformationen, welche die Form des Objektes 30 und die Position des Objektes 30 gegenüber dem Fahrzeug 1 und gegenüber dem Kamerasystem beschreiben, werden an die Bildverarbeitungseinheit übertragen. Dort wird ein Abbild des Objektes 30 in dem virtuellen dreidimensionalen Raum erzeugt.

Die geometrische Form der ersten Projektionsfläche G' wird umgeformt, indem die Abstände aller auf der ersten Projektionsfläche liegenden Punkte gegenüber der Position der virtuellen Kamera derart verringert werden, dass diese auf einer der virtuellen Kamera zugerichteten Oberfläche des Objektes 20 zu liegen kommen. Dabei wird ersichtlich, dass eine solche Umformung der ersten Projektionsfläche G' auch möglich wäre, wenn beispielsweise die von dem Fahrzeug 1 abgewandte Seite des Objektes 30 und somit die vollständige Form des Objektes nicht vollständig von der Abstandssensorik erfasst werden kann. Die Position der Punkte wird insbesondere dadurch verändert, das Polygon auf dem ein Punkt liegt in seiner Position verändert wird, also ein zugehöriger Vertex geändert wird. Die unterstützende geometrische Form der ersten Projektionsfläche G' wird also basierend auf den Abstandsinformationen verformt.

In einem vierten Schritt S4 erfolgt ein Zuordnen von Texturinformationen der Einzelbilder zu Flächenbereichen der umgeformten ersten Projektionsfläche G'. Eine Texturinformation entspricht in diesem Beispiel einer Farbinformation die aus einem Einzelbild einer der Kameras 11 bis 13 entnommen wird.

Dies ist ebenfalls bespielhaft in Figur 3 dargestellt. In dieser ist das optische Zentrum 31 der dritten Kamera 13 in dem virtuellen dreidimensionalen Raum gezeigt. Da jedem Ortspunkt in dem virtuellen dreidimensionalen Raum ein Ortspunkt in dem real existierenden Raum um das Fahrzeug zugeordnet ist, ist ebenfalls die Position der dritten Kamera 13 des Kamerasystems in dem virtuellen dreidimensionalen Raum bekannt. Vor dem optischen Zentrum 31 der dritten Kamera 13 liegt das von der dritten Kamera 13 erfasste Einzelbild in einer Kameraprojektionsfläche 32. In dem real existierenden Raum entspricht diese Kameraprojektionsfläche 32 dem Bildsensor der dritten Kamera 13 und somit auch dem von der dritten Kamera 13 erfassten Einzelbild. Jeder Punkt des Einzelbildes der dritten Kamera 13 ist ein Punkt auf der Kameraprojektionsfläche 32. Diese Punkte können beispielsweise durch eine Koordinate (u,v) beschrieben werden, die wiederum mit einer Farbinformation verknüpft ist. Die Kameraprojektionsfläche 32 liegt zwischen dem Objekt 30 und dem optischen Zentrum 31 der dritten Kamera 13. Dies bedeutet zugleich, dass das Objekt 30 in dem Einzelbild der dritten Kamera 13 gezeigt ist.

Jedem Punkt P'₀ bis P'₇ der ersten Projektionsfläche G' wird eine Farbinformation zugeteilt, indem eine Gerade zwischen dem jeweiligen Punkt P'₀ bis P'₇ und dem optischen Zentrum 31 der dritten Kamera 13 gezogen wird und dem jeweiligen Punkt P'₀ bis P'₇ die Farbinformation des Punktes des Einzelbildes zugeordnet wird, durch den die jeweils zugehörige Gerade verläuft. Somit wird jedem Punkt P'₀ bis P'₇ eine Koordinate (u,v) aus dem Einzelbild der dritten Kamera 13 zugeordnet, mit der wiederum eine Farbinformation verknüpft ist.

Dem ersten Punkt P'₀ wird eine erste Koordinate (u₀,v₀) aus dem Einzelbild der dritten Kamera 13 zugeordnet, dem zweiten Punkt P'₁ wird eine zweite Koordinate (u₁,v₁) aus dem Einzelbild der dritten Kamera 13 zugeordnet, dem dritten Punkt P'₂ wird eine dritte Koordinate (u₂,v₂) aus dem Einzelbild der dritten Kamera 13 zugeordnet, usw. Somit wird jedem der Punkte der erste Projektionsfläche G' auch eine Farbinformation und somit eine Textur zugeordnet.

In einem Fall, in dem das Objekt 30 in den Einzelbildern zweier Kameras des Kamerasystems gezeigt ist, da es in einem Überschneidungsbereich der Einzelbilder dieser Kameras liegt, ist es möglich, dass einzelnen Punkten der ersten Projektionsfläche Texturinformationen von beiden Kameras zugeordnet werden können. Würde das Objekt 30 beispielsweise sowohl in einem Einzelbild der dritten Kamera 13 als auch in einem Einzelbild der ersten Kamera 11 gezeigt sein, so könnten diesem Bereich entweder Texturinformationen (also Farbinformationen) des Einzelbildes der ersten Kamera 11 oder des Einzelbildes der dritten Kamera 13 zugeordnet werden. In diesem Falle könnte eine Kamera priorisiert werden, oder einem solchen Punkt beispielsweise ein Farbwert zugeordnet werden, der aus einem Mittelwert der beiden möglichen Farbwerte gebildet wird.

Es ist dabei nicht zwingend notwendig die Texturinformationen für jeden einzelnen Punkt einzeln zu errechnen. Ebenso können auch Bereiche des Einzelbildes und somit die Farbinformationen mehrerer Punkte jeweils einem Polygon der ersten Projektionsfläche G' bzw. einem dem Polygon zugehörigen Vertex zugeordnet werden.

In einem fünften Verfahrensschritt erfolgt ein Übertragen der Texturinformationen von den Punkten der ersten Projektionsfläche auf die entsprechend zugehörigen Punkte der zweiten Projektionsfläche. Dies erfolgt, indem die einem Punkt der ersten Projektionsfläche G' zugeordnete Koordinate (u,v) oder zumindest die mit dieser Koordinate verknüpfte Farbinformation auf den zugehörigen Punkt der zweiten Projektionsfläche G übertragen wird. Die Texturinformationen wurden somit auf die zweiten Projektionsfläche G übertragen, welche keiner Deformation unterzogen wurde.

In einem Fall, in dem die Texturinformationen nicht für jeden einzelnen Punkt einzeln, sondern Polygonweise errechnet wurden, werden die Farbinformationen eines Polygons der ersten Projektionsfläche G' jeweils auf ein zugehöriges Polygon der zweiten Projektionsfläche G übertragen.

Dies ist in Figur 4 dargestellt. Figur 4 ist eine Darstellung der zweiten Projektionsfläche G mit übertragenen Texturinformationen. Es ist ersichtlich, dass dem ersten Punkt P₀ die erste Koordinate (u₀,v₀) aus dem Einzelbild der dritten Kamera 13 zugeordnet wird, dem zweiten Punkt P₁ die zweite Koordinate (u₁,v₁) aus dem Einzelbild der dritten Kamera 13 zugeordnet wird, dem dritten Punkt P₂ eine dritte Koordinate (u₂,v₂) aus dem Einzelbild der dritten Kamera 13 zugeordnet wird, usw. Somit wird jedem der Punkte P₀ bis P₇ der zweiten Projektionsfläche G auch eine Farbinformation und somit eine Textur zugeordnet.

In einem sechsten Verfahrensschritt erfolgt ein Erzeugen des gemeinsamen Bildes aus einer Ansicht der zweiten Projektionsfläche. Diese Ansicht ist hier eine Ansicht aus der Position der virtuellen Kamera. Das bedeutet, es wird ein Bild errechnet bzw. gerendert, das die virtuelle Kamera aus ihrer Position in dem virtuellen dreidimensionalen Raum aus aufnehmen würde, wenn lediglich die zweite Projektionsfläche G, nicht aber die erste Projektionsfläche G' für diese sichtbar ist. Die zweiten Projektionsfläche G kann also als eine sichtbare Projektionsfläche betrachtet werden, die ganz oder ausschnittsweise dargestellt wird. Dabei sei vermerkt, dass die Position der virtuellen Kamera zu diesem Zeitpunkt nach Bedarf neu gewählt werden kann.

Abschließend wird das gemeinsame Bild an eine Bildausgabevorrichtung, beispielsweise einen Bildschirm im inneren des Fahrzeuges 1, ausgegeben.

Zusammenfassend werden erfindungsgemäß also zunächst Abstandsinformationen empfangen, die aus verschiedenen Sensordaten entnommen werden. Dann werden die benötigten Parameter zum Umformen der geometrischen Form der ersten Projektionsfläche G' aus den Abstandsinformationen extrahiert. Mittels dieser erfolgt ein Umformen der geometrischen Form der ersten Projektionsfläche. Darauf folgend werden Texturinformationen in Form von Koordinaten für jedes Polygon/Vertex der ersten Projektionsfläche G' errechnet. Diese Texturinformationen in Form von Koordinaten werden auf die zweite Projektionsfläche G übertragen. Abschließend erfolgt ein Rendern eines Bildes aus der zweiten Projektionsfläche G mit den errechneten Texturinformationen.

Obwohl die Erfindung hier anhand eines Surround-View-Systems an einem Fahrzeug beschrieben wurde, kann dass erfindungsgemäße Verfahren auch in anderen Bereichen eingesetzt werden, in denen Einzelbilder zu einem gemeinsamen Bild zusammengesetzt werden.

Neben der obigen schriftlichen Offenbarung wird explizit auf die Offenbarung der Figuren 1 bis 4 verwiesen.

## Patentansprüche

1. Verfahren zum Zusammenfügen von Einzelbildern, die von einem Kamerasystem aus unterschiedlichen Positionen aufgenommen wurden, zu einem gemeinsamen Bild, umfassend:
- Bereitstellen einer ersten Projektionsfläche (G') mit einer ersten geometrischen Form und einer zweiten Projektionsfläche (G) mit einer zweiten geometrischen Form, wobei jedem Punkt (P'₀ - P'₇) der ersten Projektionsfläche (G') ein Punkt (P₀ - P₇) auf der zweiten Projektionsfläche (G) zugehörig ist, wobei die erste Projektionsfläche (G') und die zweite Projektionsfläche (G) geometrische Konstrukte in einem virtuellen dreidimensionalen Raum sind,
- Erfassen von Positionsinformationen, die eine Anordnung von in den Einzelbildern gezeigten Objekten (30) gegenüber dem Kamerasystem beschreiben,
- Umformen der ersten geometrischen Form der ersten Projektionsfläche (G') basierend auf den erfassten Positionsinformationen,
- Zuordnen von Texturinformationen der Einzelbilder zu Flächenbereichen der umgeformten ersten Projektionsfläche (G'),
- Übertragen der Texturinformationen von den Punkten (P'₀ - P'₇) der ersten Projektionsfläche (G') auf die entsprechend zugehörigen Punkte (P₀ - P₇) der zweiten Projektionsfläche (G), wobei die zweite Projektionsfläche (G) nicht geometrisch verändert wird, und
- Erzeugen des gemeinsamen Bildes aus einer Ansicht der zweiten Projektionsfläche (G).

2. Verfahren nach Anspruch 1, **dadurch gekennzeichnet, dass** die erste Projektionsfläche (G') aus mehreren Polygonen oder Primitiven gebildet wird, deren Position jeweils durch einen Vektor oder ein Vertex definiert ist.

3. Verfahren nach einem der vorhergehenden Ansprüche, **dadurch gekennzeichnet, dass** die Einzelbilder einen Überschneidungsbereich abbilden, der einen gemeinsamen Bereich im Umfeld des Kamerasystems zeigt.

4. Verfahren nach einem der vorhergehenden Ansprüche, **dadurch gekennzeichnet, dass** die Positionsinformationen zeitgleich mit den Einzelbildern erfasst werden.

5. Verfahren nach einem der vorhergehenden Ansprüche, **dadurch gekennzeichnet, dass** das Kamerasystem von einem Surround-View-System eines Fahrzeuges (1) umfasst wird.

6. Verfahren nach einem der vorhergehenden Ansprüche, **dadurch gekennzeichnet, dass** die Einzelbilder mit einem zeitlichen Versatz durch dieselbe Kamera des Kamerasystems erfasst werden.

7. Bildverarbeitungseinheit (2), die eingerichtet ist, das Verfahren nach einem der vorhergehenden Ansprüche auszuführen.

8. Computer, der eingerichtet ist, das Verfahren nach einem der Ansprüche 1 bis 6 auszuführen.

9. Computerprogrammprodukt umfassend Programmteile, welche, wenn geladen in einem Computer, zur Durchführung eines Verfahrens nach einem der Ansprüche 1 bis 6 geeignet sind.

## Claims

1. Method for combining single images that have been recorded from different positions by a camera system to form a common image, comprising:
- providing a first projection area (G') having a first geometric shape and a second projection area (G) having a second geometric shape, wherein each point (P'₀-P'₇) of the first projection area (G') has associated with it a point (P₀-P₇) on the second projection area (G), wherein the first projection area (G') and the second projection area (G) are geometric constructs in a virtual three-dimensional space,
- acquiring position information describing an arrangement of objects (30) shown in the single images in relation to the camera system,
- reshaping the first geometric shape of the first projection area (G') on the basis of the acquired position information,
- assigning texture information of the single images to area regions of the reshaped first projection area (G'),
- transferring the texture information from the points (P'₀-P'₇) of the first projection area (G') to the correspondingly associated points (P₀-P₇) of the second projection area (G), with the second projection area (G) not being geometrically altered, and
- generating the common image from a view of the second projection area (G).

2. Method according to Claim 1, **characterized in that** the first projection area (G') is formed from a plurality of polygons or primitives, the position of which is defined in each case by a vector or a vertex.

3. Method according to either of the preceding claims, **characterized in that** the single images image an overlap region showing a common region in the surroundings of the camera system.

4. Method according to any of the preceding claims, **characterized in that** the position information is acquired at the same time as the single images.

5. Method according to any of the preceding claims, **characterized in that** the camera system is comprised by a surround view system of a vehicle (1).

6. Method according to any of the preceding claims, **characterized in that** the single images are captured with a temporal offset by the same camera of the camera system.

7. Image processing unit (2) configured to carry out the method according to any of the preceding claims.

8. Computer configured to carry out the method according to any of Claims 1 to 6.

9. Computer programme product comprising programme parts which, when loaded in a computer, are suitable for carrying out a method according to any of Claims 1 to 6.

## Revendications

1. Procédé pour assembler des images individuelles qui ont été prises par un système de caméra à partir de différentes positions pour former une image commune, comprenant les étapes consistant à :
- fournir une première surface de projection (G') ayant une première forme géométrique et une deuxième surface de projection (G) ayant une deuxième forme géométrique, dans lequel, à chaque point (P'₀ à P'₇) de la première surface de projection (G') est associé un point (P₀ à P₇) sur la deuxième surface de projection (G), la première surface de projection (G') et la deuxième surface de projection (G) étant des structures géométriques dans un espace tridimensionnel virtuel,
- détecter des informations de position qui décrivent un agencement d'objets (30) montrés sur les images individuelles par rapport au système de caméra,
- transformer la première forme géométrique de la première surface de projection (G') sur la base des informations de position détectées,
- attribuer des informations de texture des images individuelles à des zones de surface de la première surface de projection transformée (G'),
- transférer les informations de texture des points (P'₀ à P'₇) de la première surface de projection (G') aux points (P₀ à P₇) associés de manière correspondante de la deuxième surface de projection (G), la deuxième surface de projection (G) n'étant pas modifiée géométriquement, et
- générer l'image commune à partir d'une vue de la deuxième surface de projection (G).

2. Procédé selon la revendication 1, **caractérisé en ce que** la première surface de projection (G') est formée par plusieurs polygones ou primitives dont la position est définie respectivement par un vecteur ou un vertex.

3. Procédé selon l'une quelconque des revendications précédentes, **caractérisé en ce que** les images individuelles représentent une zone d'intersection qui montre une zone commune dans l'environnement du système de caméra.

4. Procédé selon l'une quelconque des revendications précédentes, **caractérisé en ce que** les informations de position sont détectées en même temps que les images individuelles.

5. Procédé selon l'une quelconque des revendications précédentes, **caractérisé en ce que** le système de caméra fait partie d'un système de vision panoramique d'un véhicule (1).

6. Procédé selon l'une quelconque des revendications précédentes, **caractérisé en ce que** les images individuelles sont détectées avec un décalage temporel par la même caméra du système de caméra.

7. Unité de traitement d'image (2), qui est aménagée pour exécuter le procédé selon l'une quelconque des revendications précédentes.

8. Ordinateur, qui est aménagé pour exécuter le procédé selon l'une quelconque des revendications 1 à 6.

9. Produit de programme informatique, comprenant des parties de programme qui, lorsqu'elles sont chargées sur un ordinateur, sont adaptées pour exécuter un procédé selon l'une quelconque des revendications précédentes 1 à 6.
